# EUROPÄISCHE PATENTANMELDUNG

(11) **EP 0 569 347 A2**
(43) Veröffentlichungstag der Anmeldung: **10.11.1993**
(21) Anmeldenummer: 93890085.9
(22) Anmeldetag: 28.04.1993
(51) Int. Cl.: F02N 11/04

(54) **Antriebsvorrichtung für ein Kraftfahrzeug**

(30) Priorität: 05.05.1992 AT 905/92
(71) Anmelder: Laimböck, Franz, Dipl.Ing.Dr., A-8051 Graz-Thal (AT); Spielmann, Christoph, Dipl.-Ing., A-8151 Hitzendorf (AT); Piock, Walter, Dipl.-Ing., A-8151 Hitzendorf (AT); Schöggl, Peter, Dipl.-Ing., A-8020 Graz (AT)
(72) Erfinder: Laimböck, Franz, Dipl.Ing.Dr., A-8051 Graz-Thal (AT); Spielmann, Christoph, Dipl.-Ing., A-8151 Hitzendorf (AT); Piock, Walter, Dipl.-Ing., A-8151 Hitzendorf (AT); Schöggl, Peter, Dipl.-Ing., A-8020 Graz (AT)
(74) Vertreter: Hübscher, Heiner, Dipl.-Ing.

(57) **Zusammenfassung**

Für die Antriebswelle eines Kraftfahrzeuges ist eine Antriebsvorrichtung vorgesehen, die eine Hubkolben-Brennkraftmaschine (1, 2, 3) und einen an eine Batterie (8) angeschlossenen, über eine Steuereinrichtung (7) auf Generatorbetrieb umschaltbaren Elektromotor (8) aufweist. Um eine Optimierung verschiedenster Betriebseigenschaften zu erreichen, stehen die Brennkraftmaschine (1, 2, 3) und der Elektromotor (4, 5) in bleibend drehfester Verbindung und die Steuereinrichtung (7) ist mit Hilfe einer Regeleinrichtung (9) in Abhängigkeit von wenigstens einem Betriebsparameter der Brennkraftmaschine (1, 2, 3) entsprechend abgespeicherter Kennwerte steuerbar. Wesentlich ist dabei, daß der zugleich als Startermotor dienende Elektromotor (4, 5) beim Startvorgang bei Erreichen eines vorgegebenen Kompressionshöchstdruckes der Brennkraftmaschine (1, 2, 3) von der der Betriebsdrehrichtung entgegengesetzten Drehrichtung auf die Betriebsdrehrichtung und vorzugsweise mittels der Regeleinrichtung (9) bei Erreichen einer vorgegebenen Höchstgeschwindigkeit auf Generatorbetrieb mit erhöhter Leistung umschaltbar ist.

## Beschreibung

Die Erfindung betrifft eine Antriebsvorrichtung für ein Kraftfahrzeug, für dessen Antriebswelle eine Hubkolben-Brennkraftmaschine und ein an eine Batterie angeschlossener, über eine Steuereinrichtung auf Generatorbetrieb umschaltbarer Elektromotor vorgesehen sind, wobei die Brennkraftmaschine und der Elektromotor in bleibend drehfester Verbindung stehen und die Steuereinrichtung mit Hilfe einer Regeleinrichtung in Abhängigkeit von wenigstens einem sich während eines Arbeitsspiels der Brennkraftmaschine ändernden Betriebsparameter entsprechend abgespeicherter Kennwerte steuerbar ist.

Eine solche Brennkraftmaschine ist aus der WO-A1 91/16538 bekannt. Dort dient der Elektromotor auch als Startermotor und die Kurbelwelle wird vor oder nach dem Betrieb der Brennkraftmaschine in eine Position gebracht, in der die Kolben vorteilhaft in einer Reihe ausgerichtet sind. Die Verhinderung des Überschreitens einer bauarttypischen Höchstgeschwindigkeit ist dabei aber nicht gewährleistet und es arbeitet der Startermotor von vornherein in der Betriebsdrehrichtung, ohne daß der Startvorgang von der Brennkraftmaschine her Unterstützung findet. Der Elektromotor muß daher das ganze notwendige Startmoment aufbringen, was eine entsprechende Größe dieses Motors voraussetzt.

Der Erfindung liegt die Aufgabe zugrunde, diese Mängel zu beseitigen und eine Brennkraftmaschine der eingangs geschilderten Art so zu verbessern, daß die Brennkraftmaschine während der Beschleunigung mit Unterstützung des Elektromotors betrieben werden kann, die Abstimmung der Brennkraftmaschine weitgehend unabhängig von der Geschwindigkeits- bzw. Leistungsbegrenzung erfolgt, mit einem kleineren Elektromotor das Auslangen gefunden und beim Startvorgang eine Unterstützung des Elektromotors von der Brennkraftmaschine her erreicht wird.

Die Erfindung löst die gestellte Aufgabe dadurch, daß der zugleich als Startermotor dienende Elektromotor beim Startvorgang bei Erreichen eines vorgegebenen Kompressionshöchstdruckes (Gasfeder) der Brennkraftmaschine von der der Betriebsdrehrichtung entgegengesetzten Drehrichtung auf die Betriebsdrehrichtung und vorzugsweise mittels der Regeleinrichtung bei Erreichen einer vorgegebenen Höchstgeschwindigkeit auf Generatorbetrieb mit erhöhter Leistung umschaltbar ist.

Bei einer üblichen Brennkraftmaschine für ein Fahrzeug arbeitet der Startermotor von vornherein in der Betriebsdrehrichtung, ohne daß der Startvorgang von der Brennkraftmaschine her Unterstützung findet. Da erfindungsgemäß aber der Elektromotor bei Erreichen eines vorgegebenen Kompressionshöchstdruckes der Brennkraftmaschine von der der Betriebsdrehrichtung entgegengesetzten Drehrichtung auf die Betriebsdrehrichtung umgeschaltet wird, wird die Brennkraftmaschine zu Folge der Drehrichtungsänderung des elektrischen Momentes und die zusätzliche Hilfe durch die vorher erzeugte Kompression in der Brennkraftmaschine diese mit Schwung in die Betriebsdrehrichtung gebracht und ihr Durchdrehen ermöglicht, wobei der Elektromotor nicht das ganze notwendige Startmoment aufzubringen braucht.

Da der Elektromotor die Brennkraftmaschine vor dem eigentlichen Startvorgang entgegen der Betriebsdrehrichtung so lange dreht, bis ein vorgegebener Kompressionshöchstdruck erreicht wird, ist es möglich, den größten Winkelabstand in Drehrichtung zum Zündtotpunkt zu erreichen. Bei Einzylinder-Viertaktbrennkraftmaschinen sind demnach Winkel größer als 360°, also mehr als eine Umdrehung möglich. Während des Rückwärtsdrehens der Kurbelwelle wird innerhalb des brennraumseitigen Zylinderraumes das vorhandene Gas vor dem Zündtotpunkt komprimiert. Beim Erreichen des vorgegebenen Höchstdruckes wird dann die Drehrichtung umgeschaltet und das Triebwerk der Brennkraftmaschine mit Hilfe des Startermotors und des komprimierten Gases in Betriebsdrehrichtung beschleunigt. Der Startermotor hat somit den gesamten Drehwinkel bis zum Zündtotpunkt zum Beschleunigen der Triebwerksmassen zur Verfügung. Daher kann die Motorgröße des Starters kleiner gewählt werden, weil eben ein geringeres Moment zum Erreichen der notwendigen Startdrehzahl erforderlich ist.

Selbstverständlich ist die erfindungsgemäße Ausbildung auch beispielsweise bei Zweizylinder-Brennkraftmaschinen mit 180° Kurbelversatz vorteilhaft, weil da die Zündabstände nicht symmetrisch liegen, wogegen symmetrische Zündabstände für die erfindungsgemäßen Ausbildung ungünstig wären.

In vielen Ländern gelten, insbesondere für Zweiradfahrzeuge, Geschwindigkeitsbeschränkungen. Die Abstimmung eines Fahrzeuges an eine Leistungs- bzw. Geschwindigkeitsbegrenzung erfordert aber Kompromisse, die das Verhalten der Brennkraftmaschine im Bereich niedriger Geschwindigkeiten nachhaltig beeinflussen. Der kennfeldgesteuerte Betrieb der elektrischen Maschine über den Betriebsbereich der Brennkraftmaschine eines Kraftfahrzeuges ist Voraussetzung für die optimale Verwendung der Energie einerseits und für den Einsatz als Geschwindigkeitsbegrenzung anderseits. Da meist ein Schaltgetriebe zwischen der Brennkraftmaschine und den Antriebsrädern vorhanden ist, gelingt es durch Aussetzen der Zündung bei Erreichen der Höchstdrehzahl der Brennkraftmaschine diese drehzahlmäßig zu begrenzen. Da aber in niederen Geschwindigkeitsbereichen der Motor zur optimalen Beschleunigung z. T. über die Nenndrehzahl hinaus betrieben wird, ist es nicht vorteilhaft, sie mit einer drehzahlabhängigen Zündungsunterbrechung zu versehen, sondern es ist wesentlich günstiger, das Fahrzeug während der Beschleunigung zusätzlich zur Brennkraftmaschine mit Unterstützung des Elektromotors zu betreiben. Besonders vorteilhaft ist die Verwendung eines solchen Antriebes bei einem kleinvolumigen Zweiradfahrzeug mit einer meist bauarttypischen Höchstgeschwindigkeit. Daher ist es günstig, ohne grundlegende Veränderung der Konstruktion der Brennkraftmaschine den Elektromotor, der in bleibend drehfester Verbindung mit Kurbelwelle steht, als Motor zum Starten und zum Ausgleich von Fluktuationen zu verwenden und als Generator zur Erzeugung elektrischer Energie zu benützen. Die Möglichkeit, den Elektromotor bei einer vorgegebenen Höchstgeschwindigkeit als Generator mit erhöhter Leistung (etwa durch Kurzschließen) zu verwenden, bringt demnach den weiteren Vorteil, die Abstimmung der Brennkraftmaschine weitgehend unabhängig von der Geschwindigkeits- bzw. Leistungsbegrenzung durchzuführen.

Besonders vorteilhaft ist es auch, wenn bei Anordnung eines halbautomatischen Getriebes hinter der Brennkraftmaschine der Elektromotor während der Auskupplung zum Einrücken eines höheren Getriebeganges auf Generatorbetrieb umschaltbar ist, wogegen bisher eine Zündabschaltung erfolgte, um ein Hochdrehen des Motors zu verhindern. Die erfindungsgemäße Ausbildung erbringt dagegen den Vorteil eines ruhigeren Laufverhaltens nach dem Schaltvorgang und eine geringere Abgasbelastung.

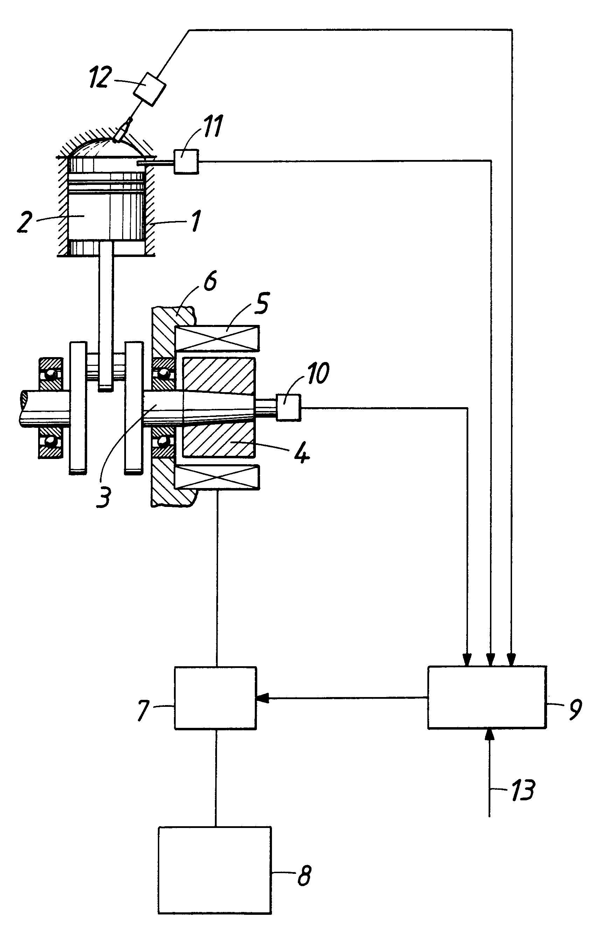

In der Zeichnung ist der Erfingungsgegenstand beispielsweise rein schematisch bzw. in seinem Blockschaltbild dargestellt.

Der im Zylinder 1 verschiebbare Kolben 2 treibt die Kurbelwelle 3 an, auf der der Rotor 4 des Elektromotors festsitzt, dessen Stator 5 an einem undrehbaren Gehäuseteil 6 der Brennkraftmaschine befestigt ist. Mit 7 ist eine Steuereinrichtung bezeichnet, mit deren Hilfe der an eine Batterie 8 angeschlossene Elektromotor 4, 5 auf Generatorbetrieb umschaltbar ist. Die Steuereinrichtung 7 wird von einer Regeleinrichtung 9 gesteuert, in der den Betriebsparametern der Brennkraftmaschine 1, 2, 3 entsprechende Kennwerte bzw. Kennfelder gespeichert sind. Der von einem Mikroprozessor gebildeten Regeleinrichtung 9 werden über einen Geber 10 für die Drehzahl bzw. den Drehzahlgradienten, einen Geber 11 für den Zylinderdruck und einen Geber 12 für den Ionenfluß der Zündkerze die jeweiligen Betriebsparameter zugeführt, wobei auch noch andere Betriebsparameter berücksichtigt werden können. Durch die Leitung 13 können weitere Kennwerte eingegeben werden.

## Patentansprüche

1. Antriebsvorrichtung für ein Kraftfahrzeug, für dessen Antriebswelle eine Hubkolben-Brennkraftmaschine (1, 2, 3) und ein an eine Batterie (8) angeschlossener, über eine Steuereinrichtung (7) auf Generatorbetrieb umschaltbarer Elektromotor (8) vorgesehen sind, wobei die Brennkraftmaschine (1, 2, 3) und der Elektromotor (4, 5) in bleibend drehfester Verbindung stehen und die Steuereinrichtung (7) mit Hilfe einer Regeleinrichtung (9) in Abhängigkeit von wenigstens einem sich während eines Arbeitsspiels der Brennkraftmaschine (1, 2, 3) ändernden Betriebsparameter entsprechend abgespeicherter Kennwerte steuerbar ist, dadurch gekennzeichnet, daß der zugleich als Startermotor dienende Elektromotor (4, 5) beim Startvorgang bei Erreichen eines vorgegebenen Kompressionshöchstdruckes der Brennkraftmaschine (1, 2, 3) von der der Betriebsdrehrichtung entgegengesetzten Drehrichtung auf die Betriebsdrehrichtung und vorzugsweise mittels der Regeleinrichtung (9) bei Erreichen einer vorgegebenen Höchstgeschwindigkeit auf Generatorbetrieb mit erhöhter Leistung umschaltbar ist.

2. Antriebsvorrichtung nach Anspruch 1, dadurch gekennzeichnet, daß bei Anordnung eines halbautomatischen Getriebes hinter der Brennkrafmaschine der Elektromotor (4, 5) während der Auskupplung zum Einrücken eines höheren Getriebeganges auf Generatorbetrieb umschaltbar ist.
